Europäisches Patentamt

European Patent Office

Office européen des brevets

(19)

(11) Veröffentlichungsnummer: **0 253 056**
**B1**

(12) **EUROPÄISCHE PATENTSCHRIFT**

(45) Veröffentlichungstag der Patentschrift:
21.03.90

(51) Int. Cl.⁴: **B03C 3/38, B03C 3/14**

(21) Anmeldenummer: **87103058.1**

(22) Anmeldetag: **04.03.87**

(54) **Verfahren zur elektrostatischen Aufladung von in einem Gasstrom suspendierten festen oder flüssigen Partikeln mittels Ionen.**

(30) Priorität: **26.03.86 CH 1208/86**

(43) Veröffentlichungstag der Anmeldung:
**20.01.88 Patentblatt 88/3**

(45) Bekanntmachung des Hinweises auf die Patenterteilung:
**21.03.90 Patentblatt 90/12**

(84) Benannte Vertragsstaaten:
**AT BE CH DE ES GB IT LI NL SE**

(56) Entgegenhaltungen:
**EP-A- 0 009 857**
**DE-C- 839 193**
**FR-A- 2 483 259**
**US-A- 4 488 885**

(73) Patentinhaber: **BBC Brown Boveri AG, Haselstrasse,
CH-5401 Baden(CH)**

(72) Erfinder: **Hirth, Michael, Dr., Weidweg 4,
CH-5035 Unterentfelden(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung geht aus von einem Verfahren zur elektrostatischen Aufladung von in einem Gasstrom suspendierten festen oder flüssigen Partikeln nach der Gattung des Oberbegriffs des Anspruchs 1 (FR-A 2 483 259).

Bei elektrostatischen Staubfiltern spielt die Art und Weise der elektrischen Aufladung eine wichtige Rolle. Sie ist unter anderem für die Dimensionierung und Betriebsführung der Filter mitbestimmend. Soll Staub elektrisch aufgeladen werden, so geschieht dies in der Regel dadurch, dass man ihn durch eine Koronaentladung leitet. Die maximal erreichbare Aufladung ist dabei proportional zur angelegten Feldstärke und die Aufladegeschwindigkeit ist proportional zur Ionendichte. In der Regel ist eine hohe Aufladung gewünscht, es muss also eine hohe Feldstärke herrschen.

Dies wirkt sich jedoch in zweifacher Hinsicht aus:

a). Die Ionendichte sinkt, da die Driftgeschwindigkeit mit der Feldstärke anwächst. Daraus folgt eine längere Ladezeit (grössere Geräte, schlechter Ausnutzungsfaktor der Ionen, da die Stosswahrscheinlichkeit mit den Partikeln abnimmt, woraus ein Energieverlust erwächst).

b). Die geladenen Partikel unterliegen einer dem Feld proportionalen Auslenkungskraft, welche die Partikel an die Wand zieht und zu Ablagerungen führt.

Es sind schon Anordnungen vorgeschlagen worden, wobei der partikelbeladene Gasstrom zunächst durch eine Vorrichtung mit Koronaentladung und anschliessend zwischen zwei mit einem elektrischen Wechselfeld beaufschlagten parallelen Platten hindurchgeführt wird. Es soll dabei durch Aufeinandertreffen von Partikeln unterschiedlicher Grösse und Geschwindigkeit eine Agglomerierung bewerkstelligt werden. Die Frequenzen des Wechselfeldes liegen dabei wesentlich unterhalb von 1 kHz (Vergl. Kobashi, Masaaki, "Particle agglomeration induced by alternating electric fields", Degree date 1979, University microfilms international, 300 N. Zeeb road, Ann Arbor, Mi 48106).

Diese brisannten Verfahren und Vorrichtungen führen nicht in optimaler Weise zum Ziel. Der Aufwand ist volumen- und kostenmässig beträchtlich. Es besteht daher ein Bedürfnis, die bestehenden Verfahren zu vereinfachen und zu verfeinern.

Der Erfindung liegt die Aufgabe zugrunde, ein Verfahren zur elektrostatischen Aufladung von in einem Gasstrom suspendierten Partikeln anzugeben, welches die Anwendung hoher Feldstärken erlaubt und zu hohen Ausnutzungsfaktoren der Ionen führt. Des weiteren sollen Staubablagerungen im Beladungsraum möglichst vermieden und dessen Abmessungen klein gehalten werden. Die nach dem Verfahren konzipierten Vorrichtungen sollen in ihrem Aufbau einfach und betriebssicher sein.

Diese Aufgabe wird durch die im kennzeichnenden Teil des Anspruchs 1 angegebenen Merkmale gelöst.

Die Erfindung wird anhand des nachfolgenden, durch eine Figur näher erläuterten Ausführungsbeispiels beschrieben.

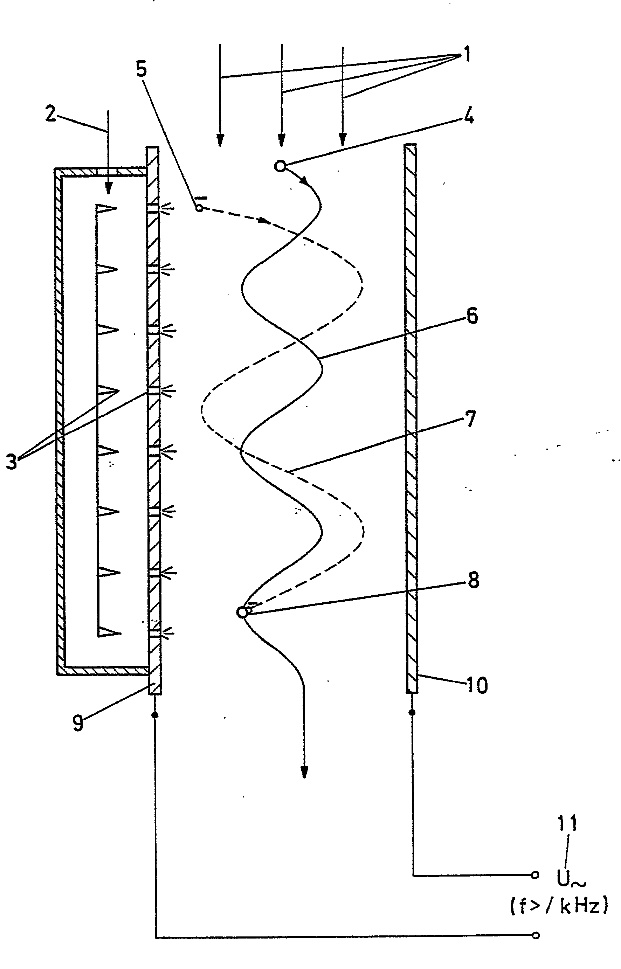

Dabei zeigt die Figur einen schematischen Längsschnitt durch eine von einem mit Partikeln beladenen Gas durchströmte Aufladevorrichtung. 1 ist der mit Partikeln beladene Gasstrom am Eintritt in die Vorrichtung. 2 stellt den in die unipolare Ionisationsquelle 3 eintretenden Ionisationsgasstrom (meistens Luft) dar. Die Ionisationsquelle 3 besteht im vorliegenden Fall aus einer mit Spitzen und Platte für Koronaentladung versehenen Kammer. 4 ist ein Partikel (fest oder flüssig) im Gasstrom 1. 5 ist ein aus der Ionenquelle 3 stammendes Ion (in der Darstellung mit dem Zeichen "-" behaftet). 6 stellt die Partikelbahn und 7 die Ionenbahn im Gasstrom 1 dar. 8 ist das nach dem Auftreffen mit einem Ion (mit Ionen) beladene Partikel. 9 ist die Ionen abgebende, mit Oeffnungen für ihren Durchtritt versehene Elektrode, während 10 die entsprechende Gegenelektrode darstellt. 11 ist eine mit Wechselspannung $U \sim$, mit einer Frequenz f von mehr als 1 kHz betriebene Hochspannungsquelle.

### Ausführungsbeispiel:

Siehe Figur:
Für die Versuche stand ein den mit Partikeln beladenen Gasstrom 1 führender Kanal rechteckförmigen Querschnitts zur Verfügung. Die Aufladevorrichtung hatte die folgenden Abmessungen:

Breite = 100 mm (für Feldaufbau massgebend)
Tiefe = 300 mm
Höhe = 500 mm (für Aufladung wirksame Länge in Strömungsrichtung)

Die Partikel 4 bestanden aus Kalkstein ($CaCO_3$) und hatten eine Grösse zwischen 1 und 20 μm. Die Beladung des Gasstromes 1 mit Partikeln betrug ca. 5 g/m³, die mittlere Gasgeschwindigkeit 10 m/s (Entsprechender Volumenstrom = 0,3 m³/s). Die als Elektroden 9 und 10 wirkenden Breitseiten der Vorrichtung bestanden aus einem Chrom-Nickel-Stahl (Handelsbezeichnung V4A), die Schmalseiten aus Polyvinylchlorid. Die unipolare Ionenquelle 3 wurde durch die mit Löchern versehene Elektrode 9 und eine Anzahl gegenüberliegender Spitzen gebildet. die Löcher hatten einen Durchmesser von 1 mm und waren auf einem orthogonalen Raster von 30 mm × 50 mm angeordnet. Den Löchern genau gegenüber und mit ihren Achsen fluchtend befanden sich in einem Abstand von 5 mm die Spitzen der Ionenquelle 3. Letzterer wurde ein Ionisationsgasstrom 2 in Form von Luft (Menge = 200 l/min) zugeführt. Die Spitzen der Ionenquelle 3 waren mit dem negativen Pol einer Gleichspannungsquelle verbunden, die bis zu einem Wert von 5 kV variiert werden konnte. Die ionenabgebende, gelochte Elektrode 9 wurde an Erdpotential gelegt, während die Gegenelektroke 10 mit dem Hochspannungspol eines Transformators (Hochspannungsquelle 11) verbunden war, der eine sinusförmige Spannung $U\sim$ von 40 kV$_{eff}$ (ca. 56 kV Scheitelwert) unter einer Frequenz von 10 kHz abgab. Dies entsprach einer maximalen mittleren homogenen Feldstärke von 5,6 kV/cm im Beladungsraum.

Im Verlaufe des Versuchs zeigte sich, dass selbst bei geringen Ionisationsspannungen der Ionenquelle 3 (weit unterhalb 5 kV) immer noch ein hoher Beladungsgrad der Staubpartikel im Gasstrom 1 erzielt werden konnte. Ferner konnte beobachtet werden, dass bei diesem Verfahren ganz allgemein nur verhältnismässig wenige Partikel die Elektroden erreichten und dort zur Abscheidung gelangten.

Das Verfahren ist nicht auf das Ausführungsbeispiel beschränkt. Der Betrieb soll so geführt werden, dass die maximale Feldstärke im Scheitelpunkt des Wechselfeldes im Beladungsraum mindestens 1 kV/cm beträgt und dass die Frequenz der Wechselspannung mindestens 1 kHz ist. Das Wechselfeld soll vorzugsweise örtlich homogen sein und die maximale Feldstärke kann bis 24 kV/cm (Scheitelwert) und die zugehörige Frequenz 1 bis 100 kHz betragen. Die unipolaren Ionen werden vorteilhafterweise in einer separaten Koronaentladung in unmittelbarer Nähe der einen (9) oder beider Elektroden (9, 10) erzeugt.

## Patentansprüche

1. Verfahren zur elektrostatischen Aufladung von in einem Gasstrom (1) suspendierten festen oder flüssigen Partikeln mittels Ionen (5), wobei aus einer separaten, unabhängigen unipolaren Ionenquelle (3) stammende Ionen (5) mittels eines quer zur Strömungsrichtung liegenden elektrischen Feldes in den Gas/Partikel-Strom (1) eingeschleust werden, dadurch gekennzeichnet, dass das Feld ein Wechselfeld mit einer so hohen Frequenz ist, dass bei der vorgegebenen maximalen Feldstärke von mindestens 1 kV/cm Scheitelwert die Driftgeschwindigkeit der Ionen (5) während einer halben Periode nicht ausreicht, diese bis zur Gegenelektrode (10) zu schleudern und dort durch Wandrekombination zu entladen, wobei das elektrische Wechselfeld örtlich homogen ist, eine maximale Feldstärke im Scheitelpunkt von bis 24 kV/cm besitzt und dessen Frequenz 1 kHz bis 100 kHz beträgt.

2. Verfahren nach Anspruch 1, dadurch gekennzeichnet, dass die unipolaren Ionen (5) in unmittelbarer Nähe der einen der Elektroden (9) oder beider Elektroden (9; 10) durch eine separate Koronaentladung in einer Ionenquelle (3) erzeugt werden.

## Claims

1. A method for electrostatically charging up solid or liquid particles suspended in a gas stream (1) by means of ions (5), in which ions (5) originating from a separate, independent unipolar ion source (3) are injected into the gas/particle stream (1) by means of an electrical field situated transversely to the flow direction, characterized in that the field is an alternating field with such a high frequency that at the specified maximum field strength of at least 1 KV/cm peak value the drift velocity of the ions (5) during a half-cycle is insufficient to propel them to the counter-electrode (10) and discharge them there as a result of wall recombination, the electrical alternating field being locally homogeneous and having a maximum field strength at the peak point of up to 24 kV/cm, and the frequency of the latter being 1 KHz to 100 kHz.

2. Method according to Claim 1, characterized in that the unipolar ions (5) are generated in the immediate neighbourhood of one of the electrodes (9) or both of the electrodes (9; 10) by a separate Korona discharge in an ion source (3).

## Revendications

1. Procédé de chargement électrostatique de particules solides ou liquides en suspension dans un courant gazeux (1) au moyen d'ions (5), dans lequel des ions (5) provenant d'une source d'ions (3) unipolaire, séparée et indépendante, sont propulsés dans le courant de gaz/particules (1) au moyen d'un champ électrique orienté transversalement par rapport à la direction d'écoulement, caractérisé en ce que le champ est un champ alternatif avec une fréquence élevée telle que, pour l'intensité maximale prédéterminée du champ d'au moins 1 kV/cm de valeur de crête, la vitesse de déplacement des ions (5) pendant une demi-période ne suffit pas pour projeter ceux-ci jusqu'à la contre-électrode (10) et les y décharger par recombinaison avec la paroi, et où le champ électrique alternatif est localement homogène et possède une intensité de champ maximale à l'apex pouvant atteindre 24 kV/cm ainsi qu'une fréquence de 1 KHz à 100 kHz.

2. Procédé suivant la revendication 1, caractérisé en ce que les ions (5) unipolaires sont produits dans une source d'ions (3) à proximité immédiate de l'une des électrodes (9) ou des deux électrodes (9, 10) au moyen d'une décharge en couronne séparée.